(19) Europäisches Patentamt

European Patent Office

Office européen des brevets

(11) Veröffentlichungsnummer: **0 646 509 A1**

## (12) EUROPÄISCHE PATENTANMELDUNG

(21) Anmeldenummer: **94115296.9**

(22) Anmeldetag: **28.09.94**

(51) Int. Cl.⁶: **B60T 8/58**, E02F 9/20

(30) Priorität: **29.09.93 US 128946**

(43) Veröffentlichungstag der Anmeldung:
**05.04.95 Patentblatt 95/14**

(84) Benannte Vertragsstaaten:
**DE FR GB IT SE**

(71) Anmelder: **DEERE & COMPANY**
**1 John Deere Road**
**Moline, Illinois 61265 (US)**

(72) Erfinder: **Nichols, Boyd Morton**
**11300 Robin Hood Drive**
**Dubuque, Iowa 52001 (US)**
Erfinder: **Bourgeous, Clarence Grant**
**8780 Jennifer Court**
**Dubuque, Iowa 52003 (US)**
Erfinder: **Oftedal, Teryl Marvin**
**8763 Badger Road**
**East Dubuque, Illinois 61025 (US)**
Erfinder: **Musgrave, Scott Allen**
**3828 Cora Drive**
**Dubuque,**
**Iowa 52002 (US)**

(74) Vertreter: **Feldmann, Bernhard et al**
**DEERE & COMPANY**
**European Office**
**Patent Department**
**D-68140 Mannheim (DE)**

(54) **Antischlupfsystem und Fahrzeug mit Antischlupfsystem.**

㉗ Es wird ein AntischlupfSystem für ein Arbeitsfahrzeug (10), welches wenigstens ein rechtes und ein linkes Vorderrad (14) und wenigstens ein rechtes und ein linkes Hinterrad (14) sowie unabhängig betätigbare Bremsen (40, 42, 44, 46), die jeweils einem der Räder (14) zugeordnet sind, enthält, beschrieben. Für ein automatisches System zur Erhöhung der Zugkraft oder des Antischlupfes eines Arbeitsfahrzeuges, das bei schlechten Zugkraftbedingungen eingesetzt wird, wird vorgeschlagen, daß jedem Rad (14) wenigstens ein Drehzahlsensor (54, 56, 58, 60) zugeordnet ist, dessen Ausgangssignal einem Steuergerät (64, 66) zugeführt wird, und daß das Steuergerät (64, 66) Mittel zum Erkennen eines Radschlupfes enthält und bei Überschreiten eines vorgebbaren Radschlupfwertes automatisch Steuersignale zum Anlegen der dem rutschenden Rad (14) zugeordneten Bremse (40, 42, 44, 46) unabhängig von der Steuerung der Bremsen (40, 42, 44, 46) der anderen Räder (14) abgibt. Vorzugsweise ist ein mit dem Steuergerät (64, 66) verbundener Knickwinkelsensor (62) vorgesehen, und die Steuereinheit (64, 66) enthält Mittel zum Berechnen eines Kompensationsfaktors CF unter Verwendung des Knickwinkelsensorsignals, der bei der Schlupfberechnung verwendet wird. Ferner wird ein Arbeitsfahrzeug mit einem derartigen Antischlupfsystem angegeben.

FIG. 1

EP 0 646 509 A1

Die Erfindung betrifft ein Antischlupfsystem für ein Arbeitsfahrzeug, welches wenigstens ein rechtes und ein linkes Vorderrad und wenigstens ein rechtes und ein linkes Hinterrad sowie unabhängig betätigbare Bremsen, die jeweils einem der Räder zugeordnet sind, enthält. Die Erfindung betrifft ferner ein Arbeitsfahrzeug mit einem Antischlupfsystem.

Um den Lenkradius zu verringern und die Manövrierfähigkeit zu steigern, sind große Arbeitsmaschinen, wie beispielsweise vierradangetriebene Lader und vierradangetriebene landwirtschaftliche Traktoren um eine senkrechte Achse, die zwischen den Vorder- und Hinterrädern liegt, gelenkig ausgebildet. Es handelt sich hierbei vor allem um Geländefahrzeuge, die unter schlechten Zugkraft- oder Schlupfbedingungen betrieben werden. Sie sind mit Vierradantrieb ausgerüstet, um die Zugkraft bzw. den Antischlupf zu erhöhen. Ferner können sie mit den Schlupf begrenzenden Differentialen oder mit Differentialsperren versehen sein, um zusätzliche Zugkraft bei besonders schlechten Bedingungen bereitzustellen.

Ein konventionelles Automobil enthält einen steifen Rahmen und wird durch eine Lenkachse gelenkt, die um eine vertikale Achse verdrehbar ist. Die Lenkachse befindet sich im allgemeinen vorn. Es wurden Zugkraftsteuersysteme für Automobile vorgeschlagen, die selektives oder unabhängiges Bremsen der Räder verwenden, um die Zugkraft zu verbessern oder aufrecht zu erhalten. Die US-A-5,205,622 beschreibt ein Zugkraftsteuersystem.

Die der Erfindung zugrunde liegende Aufgabe wird darin gesehen, ein automatisches System zur Erhöhung der Zugkraft oder des Antischlupfes für ein Arbeitsfahrzeug, das bei schlechten Zugkraftbedingungen eingesetzt wird, anzugeben. Ferner soll ein Arbeitsfahrzeug mit einem derartigen Antischlupfsystem angegeben werden.

Die Aufgabe wird erfindungsgemäß durch die Lehre des Patentanspruchs 1 bzw. 10 gelöst. Weitere vorteilhafte Ausgestaltungen und Weiterbildungen der Erfindung gehen aus den Unteransprüchen hervor.

Gemäß eines Merkmals der vorliegenden Erfindung steuert ein elektronisches Steuergerät den an ein rutschendes Rad angelegten Bremsdruck. Ein weiteres Merkmal der vorliegenden Erfindung ist es, daß die Betriebsbremse für jedes Rad durch das elektronische Steuergerät unabhängig gesteuert werden kann.

Im Betrieb erfaßt das elektronische Steuergerät die Drehgeschwindigkeiten aller vier Räder sowie den Knickwinkel des Fahrzeuges. Das Steuergerät berechnet aus der Durchschnittsdrehzahl der Vorderräder eine Vorderradzieldrehzahl und aus der Durchschnittsdrehzahl der Hinterräder eine Hinterradzieldrehzahl. Aus dem Knickwinkel des Fahrzeuges wird ein Kompensationsfaktor abgeleitet. Der Kompensationsfaktor kompensiert den Einfluß des Lenkwinkels des Fahrzeuges auf die Raddrehgeschwindigkeit und wird bei der Berechnung des Schlupfes verwendet. Wenn der Vorderradschlupf oder der Hinterradschlupf kleiner oder gleich 0,85, oder größer oder gleich 1,15 ist, legt das elektronische Steuergerät eine Bremskraft an das entsprechende rutschende Rad an. Die Bremskraft wird nach Maßgabe des tatsächlichen Radschlupfs zuzüglich der Bremskraft, die im letzten Zyklus berechnet wurde, und abzüglich eines Verzögerungsfaktors angelegt.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1
die Seitenansicht eines vierradangetriebenen Laders,

Fig. 2
das hydraulische und elektrische Schema einer ersten Ausgestaltung eines erfindungsgemäßen Antischlupfsteuersystems,

Fig. 3
das hydraulische und elektrische Schema einer zweiten Ausgestaltung eines erfindungsgemäßen Antischlupfsteuersystems und

Fig. 4A bis 4C
Flußdiagramme, aus denen die Wirkungsweise des Antischlupfsteuersystems hervorgeht.

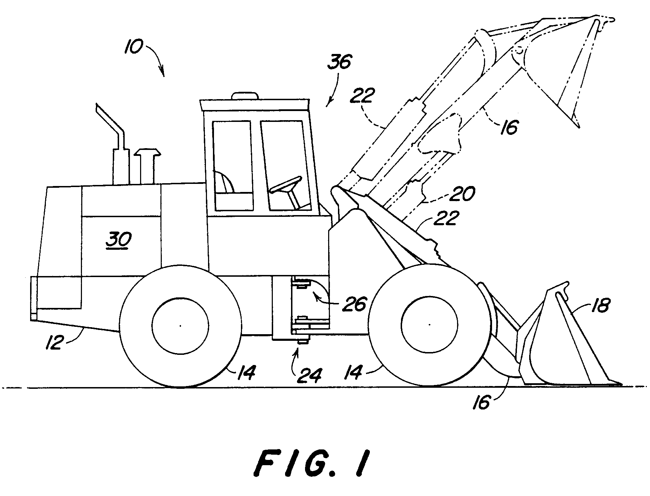

Fig. 1 stellt die Seitenansicht eines vierradangetriebenen gelenkigen Laders 10 (Knicklenker) dar. Der Lader 10 enthält eine Tragstruktur 12 und mit dem Boden in Eingriff tretende Räder 14. An der Vorderseite des Laders 10 befindet sich eine bewegliche Auslegeranordnung 16, an deren Ende eine verschwenkbare Schaufel 18 befestigt ist. Der Ausleger 16 läßt sich durch Ausdehnen eines hydraulischen Auslegerbetätigungsorgans 20 anheben, und die Schaufel 18 läßt sich durch ein Schaufelverschwenkbetätigungsorgan 22 verschwenken.

Der Lader 10 läßt sich durch einen hydraulischen Steuerkreis, wie er durch die US-A-4,898,078 offenbart wurde, um senkrechte Zapfen 24 und 26 abknicken und lenken. Der Lader 10 wird durch eine Verbrennungskraftmaschine 28, die in einem Motorgehäuse 30 untergebracht ist, angetrieben. Die Verbrennungskraftmaschine 28 treibt ein Getriebe 32 an, welches seinerseits den Lader 10 und eine Hydraulikpumpe 34 antreibt. Durch die Hydraulikpumpe 34 werden unterschiedliche Fahrzeugfunktionen, wie beispielsweise die hydraulisch betätigten Bremsen, gespeist. Die Bedienungsperson steuert den Lader 10 von der Kabine 36 aus.

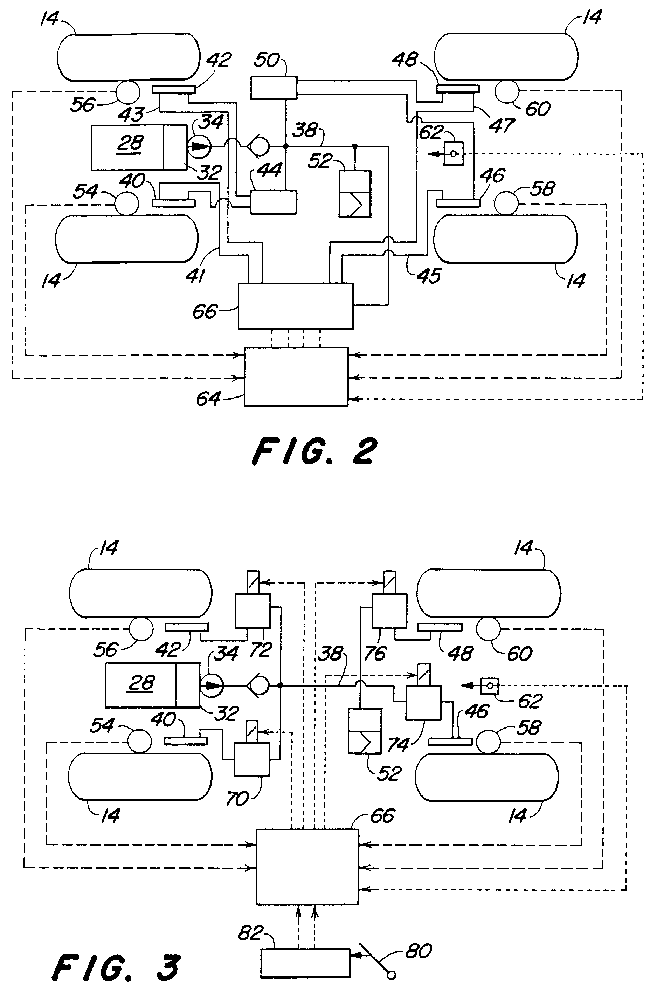

Fig. 2 bezieht sich auf eine erste Ausgestaltung eines Antischlupfsteuersystems für den Lader 10. Die Hydraulikpumpe 34 pumpt unter Druck stehende Hydraulikflüssigkeit in eine Zu- und Rückführleitung 38. Die unter Druck stehende Hydraulikflüssigkeit wird durch ein linkes Pedalventil 44 zu der linken vorderen Betriebsbremse 40 und der rechten vorderen Betriebsbremse 42 geleitet. Auf ähnliche Weise wird die unter Druck stehende Hydraulikflüssigkeit durch ein rechtes Pedalventil 50 zu der linken hinteren Betriebsbremse 46 und der rechten hinteren Betriebsbremse 48 geleitet. Ein hydraulischer Akkummulator 52 wird verwendet, um einen Reservehydraulikdruck bereitzustellen, für den Fall, daß das Fahrzeug abgeschaltet ist.

Das linke Pedalventil 44 und das rechte Pedalventil 50 enthalten je zwei Hydraulikventile, durch die unabhängig voneinander Druck an die linke oder die rechte vordere Betriebsbremse 40 und 42 bzw. die linke oder die rechte hintere Betriebsbremse 46 und 48 angelegt werden kann. Damit kann die Bedienungsperson durch wahlweises Niederdrücken des Bremsventils 44 und 50 Bremskraft an die Vorderräder oder die Hinterräder anlegen.

Jedes Rad ist ferner mit einem Drehzahlsensor 54, 56, 58 und 60 versehen. Jeder dieser Drehzahlsensoren 54, 56, 58 und 60 liefert ein elektronisches Signal, das der Drehzahl des individuellen Rades entspricht. Das Fahrzeug 10 enthält ferner einen Knickwinkelsensor 62, der ein dem Knickwinkel des Fahrzeuges entsprechendes elektronisches Signal liefert.

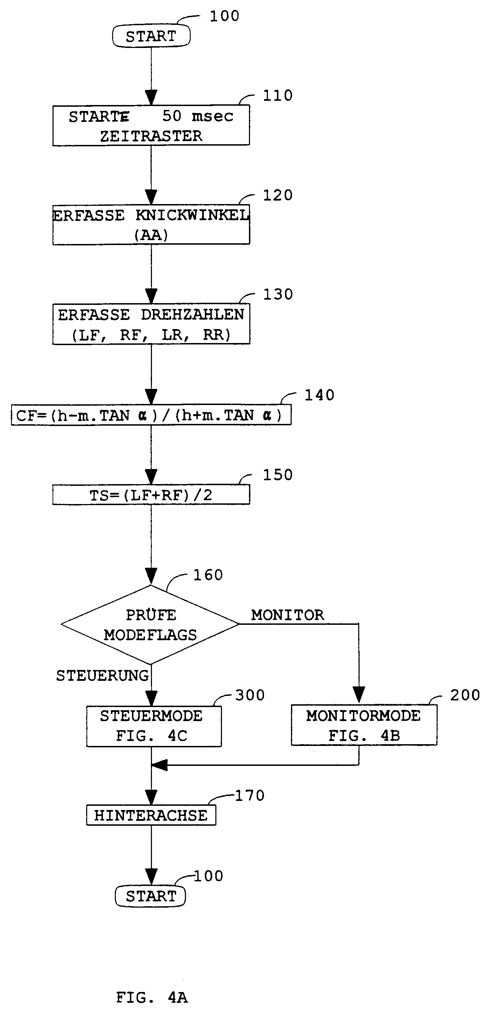

Die vier Drehzahlsensoren 54, 56, 58 und 60 und der Knickwinkelsensor 62 stehen elektrisch mit einem elektronischen Steuergerät 64 in Verbindung. Das elektronische Steuergerät 64 ist elektrisch mit Druckreduzierventilen 66 verbunden. Die Druckreduzierventile 66 ihrerseits sind über die Zu- und Rückführleitungen 41, 43, 45 und 47 hydraulisch mit den Bremsen 40, 42, 44 und 46 gekoppelt. In Abhängigkeit der Signale der Drehzahlsensoren 54, 56, 58 und 60 und des Knickwinkelsensors 62 macht das elektronische Steuergerät 64 Meldung an die Druckreduzierventile 66, welche wahlweise Bremsdruck an jede der Bremsen 42, 44, 46 und 48 anlegen. Das elektronische Steuergerät 64 wird durch einen Algorithmus gesteuert, der in den Fig. 4A bis 4C dargestellt ist.

Eine elektrisch betätigte Ausgestaltung geht aus Fig. 3 hervor. In Fig. 3 wurden die gleichen Bezugszahlen für die gleichen in Fig. 2 dargestellten Elemente verwendet. In der Ausgestaltung gemäß Fig. 3 handelt es sich bei dem linken vorderen Bremsventil 70, dem rechten vorderen Bremsventil 72, dem linken hinteren Bremsventil 74 und dem rechten hinteren Bremsventil 76 um elektromagnetische Ventile, die unmittelbar durch das elektronische Steuergerät 66 gesteuert werden. Außerdem erfolgt die Betätigung der Betriebsbremsen ebenfalls über das elektronische Steuergerät, welches Signale von einem mit einem Fußbremspedal 80 verbundenen Bremspedallagesensor 82 erhält.

Der Algorithmus zur Steuerung des Antischlupfsteuersystems ist in den Flußdiagrammen der Fig. 4A bis 4C dargestellt. Wie in Fig. 4A gezeigt, startet der erste Schritt 100 das Antischlupfsteuersystem. Im zweiten Schritt 110 inizialisiert das elektronische Steuergerät ein 50 msec Zeitraster. Im dritten Schritt 120 fragt das elektronische Steuergerät den Knickwinkelsensor 62 ab, um den Knickwinkel (AA) des Fahrzeuges zu bestimmen. In Schritt 130 fragt das elektronsiche Steuergerät die Drehzahlsensoren 54, 56, 58 und 60 ab, um die Drehzahlen der einzelnen Räder (LF, RF, LR und RR) zu bestimmen.

Nachdem das elektronische Steuergerät diese Variablen bestimmt hat, berechnet es in Schritt 140 einen Winkelkompensationsfaktor (CF) und in Schritt 150 eine Zieldrehzahl (TS). Der Winkelkompensationsfaktor (CF) wird anhand folgender Gleichung berechnet,

$$CF = (h - m.\tan \alpha)/(h + m.\tan \alpha),$$

in der h die Entfernung zwischen der Mittellinie der Radachse und der Knickachse, m die halbe Spurweite und $\alpha$ der Knickwinkel ist. Der Winkelkompensationsfaktor wird dann für eine spätere Verwendung gespeichert. Es sei darauf hingewiesen, daß der Winkelkompensationsfaktor bei den meisten Knicklenkern für die Vorder- und Hinterräder gleich ist, jedoch kann in einigen Fahrzeugen der Abstand (h) zwischen der Knickachse und der Mittelinie der Vorderachse bzw. der Hinterachse unterschiedlich sein. Ferner kann die Spurweite (m) bei der Vorder- und der Hinterachse unterschiedlich sein. Bei der folgenden Anwendung wird angenommen, daß die Faktoren h und m für die Vorder- und Hinterachse konstant sind. Dadurch sind die Kompensationsfaktoren für beide Achsen gleich.

Die Vorderachszieldrehzahl (bzw. -zielgeschwindigkeit) wird aus der Drehzahl des linken vorderen Rades (LF) und des rechten vorderen Rades (RF) berechnet. Das elektronische Steuergerät berechnet die Vorderachszieldrehzahl (TS) als mittlere Geschwindigkeit (TS = (LF + RF)/2) der beiden Vorderräder.

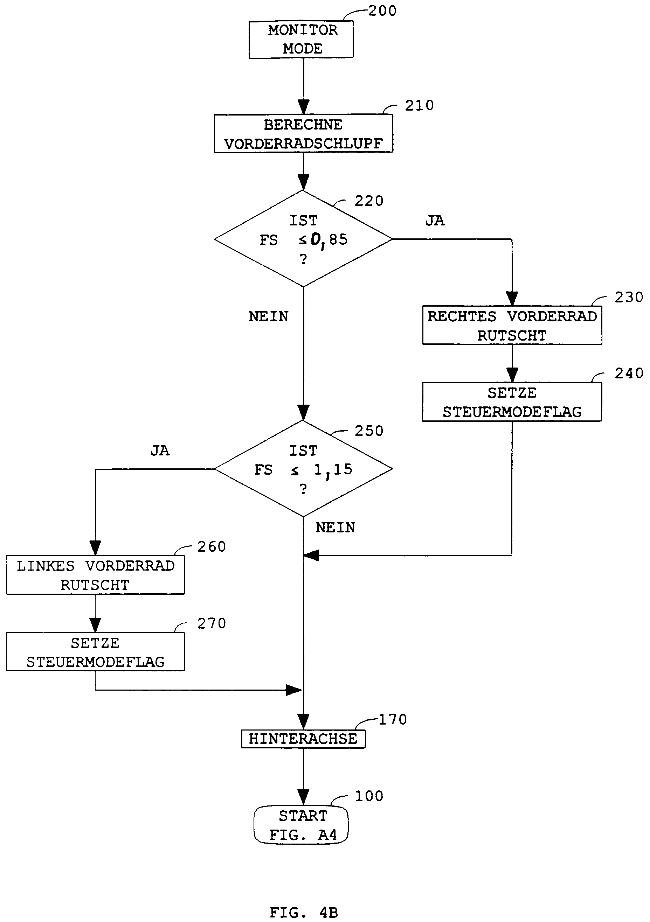

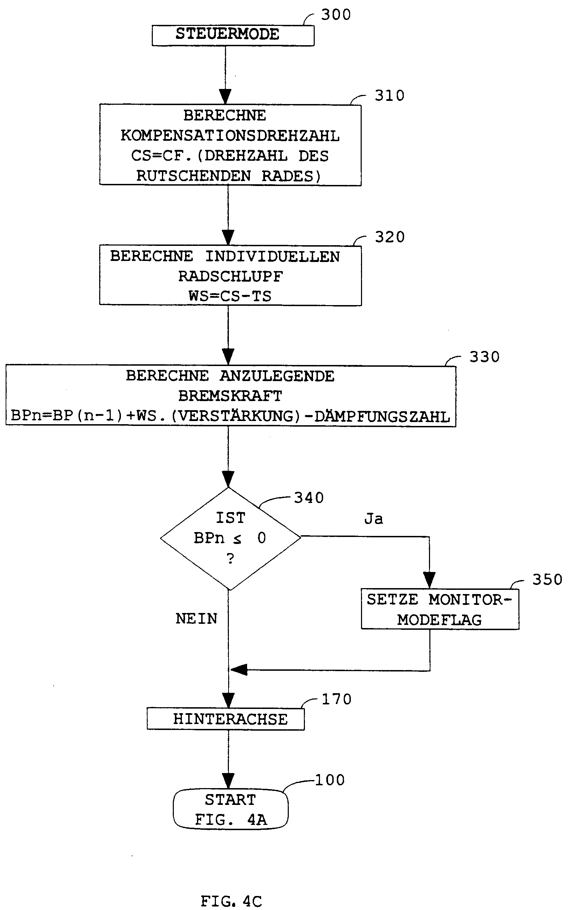

In Schritt 160 führt das elektronische Steuergerät eine Überprüfung auf früher gesetzte Steueroder Monitormodeflags durch. Wenn keine Steuermodeflags gefunden werden, leitet das elektronische Steuergerät die in Fig. 4B dargestellte Monitormoderoutine ein. Wenn ein Steuermodeflag gefunden wird, wird das Programm mit der in Fig. 4C dargestellten Steuermoderoutine fortgesetzt.

Nach Durchführung der Steuermoderoutine oder der Monitormoderoutine führt das elektronische Steuergerät die gleichen Operationen für die Hinterräder und die Hinterachse aus. Genauer gesagt, falls erforderlich, berechnet das elektronische Steuergerät einen Hinterachskompensationsfaktor und eine Zieldrehzahl (bzw. -geschwindigkeit). Dann sucht das elektronische Steuergerät nach Steuer- oder Monitormodeflags, um eine Monitormoderoutine oder eine Steuermoderoutine für die Hinterräder durchzuführen. Der Einfachheit halber wurde der Hinterradanteil des Programms nicht dargestellt, da dieser im wesentlichen identisch mit dem Vorderradanteil des dargestellten Programms ist.

Die Monitormoderoutine ist in Fig. 4B dargestellt. In Schritt 210 berechnet das elektronische Steuergerät zunächst den Vorderradschlupf (FS), in dem es die Drehzahl des linken vorderen Rades (LF) durch die Drehzahl des rechten Vorderrades (RF) dividiert und den Quotienten mit dem Kompansationsfaktor (CF) multipliziert.

In Schritt 220 stellt das elektronische Steuergerät fest, ob der Schlupf kleiner oder gleich 0,85 ist. Ist der Vorderradschlupf kleiner oder gleich 0,85, so richtet das elektronische Steuergerät den Algorithmus zu den Schritten 230 und 240. Wenn der Vorderradschlupf größer als 0,85 ist, richtet das elektronsische Steuergerät den Algorithmus auf Schritt 250. In Schritt 230 speichert das elektronische Steuergerät die Information, daß das rechte Vorderrad rutscht, ab. In Schritt 240 wird ein Steuermodeflag gesetzt. Nachdem Schritt 240 ausgeführt ist, richtet das elektronische Steuergerät den Algorithmus auf Schritt 170. Nach Durchführung des Schritts 170 kehrt das elektronische Steuergerät zum Start bei Schritt 100 zurück.

Bei Schritt 250 stellt das elektronische Steuergerät fest, ob der Vorderradschlupf größer oder gleich 1,15 ist. Ist der Vorderradschlupf größer oder gleich 1,15, richtet das elektronische Steuergerät den Algorithmus auf die Schritte 260 und 270. Wenn der Vorderradschlupf kleiner als 1,15 ist, richtet das elektronische Steuergerät den Algorithmus auf Schritt 170. In Schritt 260 speichert das elektronische Steuergerät die Information, daß das linke Vorderrad rutscht, ab. In Schritt 270 wird ein Steuermodeflag gesetzt. Nachdem Schritt 270 ausgeführt ist, richtet das elektronische Steuergerät den Algorithmus auf Schritt 170. Nach Durchführung des Schritts 170 kehrt das elektronische Steuergerät zum Start bei Schritt 100 zurück.

Die Steuermoderoutine ist in Fig. 4C dargestellt. Sie wird verwendet, um den Betrag des Bremskraftbedarfs zu berechnen, der an ein ausgewähltes rutschendes Rad anzulegen ist. In Schritt 310 berechnet das elektronische Steuergerät die Kompensationsdrehzahl (CS) für das individuelle rutschend Rad, indem es den Kompensationsfaktor (CF) mit der Drehzahl des rutschenden Rades, die in der Monitormoderoutine herausgefunden wurde, multipliziert. Als nächstes berechnet das elektronische Steuergerät in Schritt 320 den individuellen Radschlupf, indem es die Kompensationsdrehzahl (CS) von der Zieldrehzahl (TS) subtrahiert.

In Schritt 330 berechnet das elektronische Steuergerät die Bremskraft für das rutschende Rad und legt diese an. Der Betrag der Bremskraft (BPn), der in dem aktuellen Zyklus angelegt werden soll, entspricht dem Betrag der Bremskraft (BP(n-1)), der im letzten Zyklus angelegt wurde, zuzüglich des gegebenenfalls mit einem Verstärkungsfaktor multiplizierten individuellen Radschlupfs (WS) und abzüglich einer Dämpfungszahl. Die Dämpfungszahl ist ein Konstantfaktor. In Schritt 340 bestimmt das elektronische Steuergerät, ob die aktuelle Bremskraft (BPn) kleiner oder gleich Null ist. Ist die aktuelle Bremskraft kleiner oder gleich Null, so setzt das elektronische Steuergerät in Schritt 350 ein Monitormodeflag. Nachdem das Flag in Schritt 350 gesetzt wurde, schreitet das elektronische Steuergerät zu Schritt 170 fort. Wenn die aktuelle Bremskraft größer als Null ist, geht das elektronische Steuersystem unmittelbar zu Schritt 170 über.

Nachdem die Hinterachsroutine in Schritt 170 abgeschlossen wurde, kehrt das elektronische Steuersystem zum Start in Schritt 100 zurück. Das elektronische Steuergerät aktualisiert die Daten des Knickwinkels und der Drehzahlsensoren und überprüft, ob entweder in der Monitormoderoutine oder in der Steuermoderoutine Flags gesetzt wurden.

**Patentansprüche**

1. Antischlupfsystem für ein Arbeitsfahrzeug (10), welches wenigstens ein rechtes und ein linkes Vorderrad (14) und wenigstens ein rechtes und ein linkes Hinterrad (14) sowie unabhängig betätigbare Bremsen (40, 42, 44, 46), die jeweils einem der Räder (14) zugeordnet sind, enthält, dadurch gekennzeichnet, daß jedem Rad (14) wenigstens ein Drehzahlsensor (54, 56, 58, 60) zugeordnet ist, dessen Ausgangssignal einem elektrischen Steuergerät (64, 66) zugeführt wird, und daß das Steuergerät (64, 66) Mittel zum Erkennen eines Radschlupfes enthält und bei Überschreiten eines vorgebbaren Radschlupfwertes automatisch Steuersignale zum Anlegen der dem rutschenden Rad (14) zugeordneten Bremse (40, 42, 44, 46) unabhängig von der Steuerung der Bremsen (40, 42, 44, 46) der anderen Räder (14) abgibt.

2. Antischlupfsystem nach Anspruch 1, dadurch gekennzeichnet, daß das Steuergerät (64, 66) Mittel zur Berechnung der mittleren Drehzahl TS wenigstens einer Radachse enthält.

**3.** Antischlupfsystem für ein als Knicklenker (10) ausgebildetes Arbeitsfahrzeug nach Anspruch 1 oder 2, dadurch gekennzeichnet, daß ein mit dem Steuergerät (64, 66) verbundener Knickwinkelsensor (62) vorgesehen ist und daß die Steuereinheit (64, 66) Mittel zum Berechnen eines Kompensationsfaktors CF unter Verwendung des Knickwinkelsensorsignals erhält, der bei der Schlupfberechnung verwendet wird.

**4.** Antischlupfsystem nach Anspruch 3, dadurch gekennzeichnet, daß das Steuergerät (64, 66) Mittel zur Berechnung des Kompensationsfaktors CF anhand folgender Gleichung enthält:

$$CF = (h - m.\tan \alpha)/(h + m.\tan \alpha),$$

wobei h die Entfernung zwischen der Mittellinie der Radachse und der Knickachse, m die halbe Spurweite und $\alpha$ der Knickwinkel ist.

**5.** AntischlupfSystem nach Anspruch 3 oder 4, dadurch gekennzeichnet, daß das Steuergerät (64, 66) Mittel enthält, durch die aus dem Kompensationswert CF bestimmt wird, ob Bremsen (40, 42, 44, 46) eines individuellen Rades (14) angelegt werden sollen und welche Bremskraft verwendet werden soll.

**6.** AntischlupfSystem nach einem der Ansprüche 3 bis 5, dadurch gekennzeichnet, daß das Steuergerät (64, 66) Mittel zur Berechnung einer Kompensationsdrehzahl CS für ein individuelles rutschendes Rad (14) aus dem Produkt von Kompensationsfaktor CF und der tatsächlichen Drehzahl des rutschenden Rades (14) enthält.

**7.** Antischlupfsystem nach Anspruch 6, dadurch gekennzeichnet, daß das Steuergerät Mittel zur Berechnung des individuellen Radschlupfes WS aus der Differenz zwischen der Kompensationsdrehzahl CS und einer berechneten und/oder gemessenen Zieldrehzahl, insbesondere der mittleren Drehzahl TS der Räder (14) der zugehörigen Radachse, enthält.

**8.** Antischlupfsystem nach einem der Ansprüche 1 bis 7, dadurch gekennzeichnet, daß das Steuergerät (64, 66) Mittel zur zyklischen Berechnung der an das rutschende Rad (14) anzulegenden Bremskraft enthält, wobei von der in dem vorhergehenden Zyklus ermittelten Bremskraft ein gegebenenfalls durch einen Faktor beaufschlagter individuell berechneter Radschlupf WS subtrahiert und ein Konstantfaktor addiert wird.

**9.** Antischlupfsystem nach einem der Ansprüche 3 bis 8, dadurch gekennzeichnet, daß das Steuergerät (64, 66) Mittel enthält, die bei einem Radschlupf von über 15 % Steuersignale zur Abbremsung des Rades (14) abgeben, wobei der Radschlupf gleich dem Produkt aus Kompensationsfaktor CF einerseits und dem Quotienten der beiden Raddrehzahlen einer Radachse andererseits ist.

**10.** Arbeitsfahrzeug mit einem Antischlupfsystem nach einem der Ansprüche 1 bis 9.

FIG. 1

**FIG. 2**

**FIG. 3**

START 100

STARTE 50 msec ZEITRASTER 110

ERFASSE KNICKWINKEL (AA) 120

ERFASSE DREHZAHLEN (LF, RF, LR, RR) 130

$CF=(h-m.TAN \alpha)/(h+m.TAN \alpha)$ 140

$TS=(LF+RF)/2$ 150

PRÜFE MODEFLAGS 160

MONITOR

STEUERUNG

STEUERMODE FIG. 4C 300

MONITORMODE FIG. 4B 200

HINTERACHSE 170

START 100

FIG. 4A

8

FIG. 4B

300
STEUERMODE

310
BERECHNE
KOMPENSATIONSDREHZAHL
CS=CF.(DREHZAHL DES
RUTSCHENDEN RADES)

320
BERECHNE INDIVIDUELLEN
RADSCHLUPF
WS=CS-TS

330
BERECHNE ANZULEGENDE
BREMSKRAFT
BPn=BP(n-1)+WS.(VERSTÄRKUNG)-DÄMPFUNGSZAHL

340
IST
BPn ≤ 0
?

Ja

350
SETZE MONITOR-
MODEFLAG

NEIN

170
HINTERACHSE

100
START
FIG. 4A

FIG. 4C

| **EINSCHLÄGIGE DOKUMENTE** | | | EP 94115296.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.6) |
| X | US - A - 4 970 650 (HASHIGUCHI et al.) * Fig. 1A; Anspruch 1 * | 1 | B 60 T 8/58 E 02 F 9/20 |
| A | DE - A - 3 101 736 (K.K. KOMATSU SEISAKUSHO) * Zusammenfassung * | 1 | |
| A | WO - A - 90/14 472 (M & H BLANCH PTY LIMITED) * Ansprüche 1-12 * | 1 | |
| A | AT - B - 385 538 (VOEST-ALPINE AG) * Zusammenfassung * | 1 | |
| D,A | US - A - 5 205 622 (GEE) * Anspruch 1 * | 1 | |
| D,A | US - A - 4 898 078 (GAGE et al.) * Ansprüche 1-8 * | 1 | RECHERCHIERTE SACHGEBIETE (Int. Cl.6) |
| | | | B 60 T 8/00 E 02 F 9/00 F 15 B 11/00 |

Der vorliegende Recherchenbericht wurde für alle Patentansprüche erstellt.

| Recherchenort | Abschlußdatum der Recherche | Prüfer |
|---|---|---|
| VIENNA | 14-12-1994 | KAMMERER |